# EUROPÄISCHE PATENTSCHRIFT

(11) **EP 0 987 146 B1**
(45) Veröffentlichungstag und Bekanntmachung des Hinweises auf die Patenterteilung: **27.09.2006**
(21) Anmeldenummer: 99116818.8
(22) Anmeldetag: 01.09.1999
(51) Int. Cl.: B60R 16/02, H02J 7/14

(54) **Zwei-Batteriesystem**
Two-battery system
Système à deux batteries

(30) Priorität: 17.09.1998 DE 19842657
(43) Veröffentlichungstag der Anmeldung: 22.03.2000
(73) Patentinhaber: Volkswagen Aktiengesellschaft, 38436 Wolfsburg (DE)
(72) Erfinder: Dierker, Uwe, Dipl.-Ing., 38550 Isenbüttel (DE)

(56) Entgegenhaltungen:
- FR-A- 2 729 901

## Beschreibung

Die Erfindung betrifft ein Zwei-Batteriesystem und ein Verfahren zur Ansteuerung des Zwei-Batteriesystems.

Ein derartiges Zwei-Batteriesystem ist aus der DE 40 28 242 A1 bekannt, das eine Starterbatterie und eine Bordnetzbatterie umfaßt. Zwischen der Starterbatterie und der Bordnetzbatterie ist ein Starterbatterieschalter angeordnet, der bei einem Startvorgang geschlossen wird, so daß die beiden Batterien miteinander verbunden sind. Die Versorgung von Primärverbrauchern und Sekundärverbrauchem findet dann über beide Batterien statt. Unter Primärverbrauchern werden die für das Start- und Fahrvermögen oder die Fahrzeugsicherheit wesentlichen Verbraucher und unter Sekundärverbrauchern Komfortkomponenten verstanden. Um eine Entladung der Starterbatterie zu verhindern, erfaßt ein Steuergerät die Ladezustände der Starterbatterie und der Bordnetzbatterie. Sinkt dann der Ladezustand der Starterbatterie unter den der Bordnetzbatterie, so daß eine Ladung der Bordnetzbatterie auf Kosten der Starterbatterie stattfinden würde, so trennt das Steuergerät die Verbindung zwischen den Batterien durch eine Öffnung des Starterbatterieschalters auf. Nachteilig an dem bekannten Zwei-Batteriesystem ist, daß einerseits die Starterbatterie auch nach erfolgtem Startvorgang belastet wird und andererseits der meßtechnische Aufwand zur Erfassung der Ladezustände der beiden Batterien recht groß ist.

Die FR 2 729 901 ist gattungsbildend.

Der Erfindung liegt daher das technische Problem zugrunde, ein Zwei-Batteriesystem zu schaffen, bei dem die Starterbatterie nur in der Startphase belastet, die Starterbatterie jedoch jederzeit wenn der Lastzustand es erlaubt, geladen werden kann und nur einen geringen schaltungstechnsichen Aufwand benötigt.

Die Lösung des technischen Problems ergibt sich durch die Merkmale der Patentansprüche 1 und 8. Durch die Anordnung eines steuerbaren elektronischen Schalters, insbesondere eines MOSFET, parallel zum Leistungsschalter kann durch die interne Strommessung des MOSFET sehr einfach erfaßt werden, ob der Ladezustand von Starterbatterie und Bordnetzbatterie ein Aufladen der Starterbatterie ermöglicht. Durch Erzeugen einer vorzeichengerechten Gatespannung kann in einem solchen Fall eine Ladestrecke freigeschaltet werden und die Starterbatterie aufgeladen werden. Ansonsten trennt der MOSFET die Starterbatterie von den Primär- und Sekundärverbraucher, so daß die Starterbatterie ausschließlich im Startvorgang belastet wird. Da alle notwendigen Steuerinformationen im MOSFET intern bereits zur Verfügung stehen, entfallen separate Meßshunts und auch der Aufbau des Steuergeräts läßt sich sehr einfach realisieren. Weitere vorteilhafte Ausgestaltungen der Erfindung ergeben sich aus den Unteransprüchen.

In einer bevorzugten Ausführungsform wird zwischen der Bordnetzbatterie und den Primärverbrauchern ein Schalter angeordnet, mit dem vor dem Startvorgang wahlweise die Versorgung der Primärverbraucher zwischen der Bordnetzbatterie und der Starterbatterie umgeschaltet werden kann, wobei dieser Schalter vorzugsweise ebenfalls als MOSFET ausgebildet ist.

Vorzugsweise werden die beiden MOSFETs gegeneinander verpolt, so daß entweder jeweils die beiden Source- oder Drainanschlüsse miteinander verbunden sind, so daß über die parasitären Dioden der MOSFETs kein Kurzschlußpfad entstehen kann.

Die Erfindung wird nachfolgend anhand eines bevorzugten Ausführungsbeispieles näher erläutert. Die Fig. zeigen:
- Fig. 1: eine Schaltungsanordnung eines Zwei-Batteriesystems mit parallel geschalteter Diode,
- Fig. 2: eine Schaltungsanordnung mit der Starterbatterie zugeordneten Primärverbrauchern;
- Fig.3: eine Schaltungsanordnung mit einem zusätzlichen Umschalter zwischen Starterbatterie und Bordnetzbatterie,
- Fig. 4: eine Schaltungsanordnung mit MOSFETs,
- Fig. 5: eine Schaltungsanordnung mit gegeneinander verpolten MOSFETs mit gemeinsamen Drainanschluß und
- Fig. 6: eine Schaltungsanordnung mit gemeinsamen Sourceanschluß.

Das Batteriesystem 1 umfaßt eine Starterbatterie 2, einen Generator 3, Primärverbraucher 4, Sekundärverbraucher 5, eine Bordnetzbatterie 6, einen Zündanlaßschloßschalter 7, einen Starter 8 mit zugeordnetem Schalter 9. Zwischen der Starterbatterie 2 und dem Generator 3 bzw. der Bordnetzbatterie 6 ist ein Leistungsschalter 10 mit parallel geschalteter Diode 11 angeordnet. Vor der Einleitung eines Startvorganges sind alle Schalter 7, 9 und 10 geöffnet. Die für den Startvorgang benötigten Primärverbraucher 4 , wie beispielsweise ein Motorsteuergerät, werden ausschließlich über die Bordnetzbatterie 6 versorgt. Wird nun der Zündanlaßschloßschalter 7 beispielsweise durch Drehung des Zündschlüssels geschlossen, so bewirkt der von der Bordnetzbatterie 6 über den Zündanlaßschloßschalter 7 fließende Strom ein Schließen des Schalters 7, wodurch der Stromkreis zwischen Starterbatterie 2 und Schalter 8 geschlossen wird. Dadurch fließt ein Starterstrom von der Starterbatterie 2 zu einem dem Starter 8 zugeordneten Startermotor, der zu drehen beginnt und versucht einen Verbrennungsmotor anzuwerfen. Weiter führt das Schließen des Zündanlaßschalters 7 zu einem Schließen des Leistungsschalters 10, so daß die Starterbatterie 2 und die Bordnetzbatterie 6 parallel geschaltet sind. Je nach Ladezustand der beiden Batterien kommt es dann zu einem Ladungsausgleich untereinander und beide Batterien stehen zur Versorgung der Primärverbraucher 4 und des Starters 8 zur Verfügung. Nach Beendigung des Startvorganges werden dann alle Schalter 7, 9 und 10 wieder geöffnet, so daß im Normalbetrieb die Starterbatterie 2 nicht belastet wird. Die Diode 11 bildet dabei eine Ladestrecke zwischen der Bordnetzbatterie 6 bzw. dem Generator 3 und der Starterbatterie 2, so daß über die Diode 11 ein Ladestrom fließen kann, falls die Spannungsdifferenz zwischen Bordnetzbatterie 6 und der Starterbatterie 2 größer als 0,7 V wird. Ist hingegen die Spannungsdifferenz kleiner, so sperrt die Diode 11 und die Starterbatterie ist gegen Entladung geschützt. Der Vorteil dieser Anordnung ist, daß die Ladestrecke über die Diode keine separate Steuerung benötigt. Jedoch weist diese Anordnung auch einige Nachteile auf. Zum einen ist die Ladespannung für die Starterbatterie 2 stets um den Spannungsabfall an der Diode 11 reduziert. Zum anderen kann ein Motorstart nicht erfolgen, falls die Bordnetzbatterie 6 derart weit entladen ist, daß diese die Primärverbraucher 4 nicht mehr versorgen kann. Hierzu müßte dann der Leistungsschalter 10 bereits vor dem eigentlichen Startvorgang geschlossen werden, um die Bordnetzbatterie 6 über die Starterbatterie 2 ausreichend aufzuladen. Dazu muß jedoch der Aufwand für das nicht dargestellt Steuergerät wieder erhöht werden.

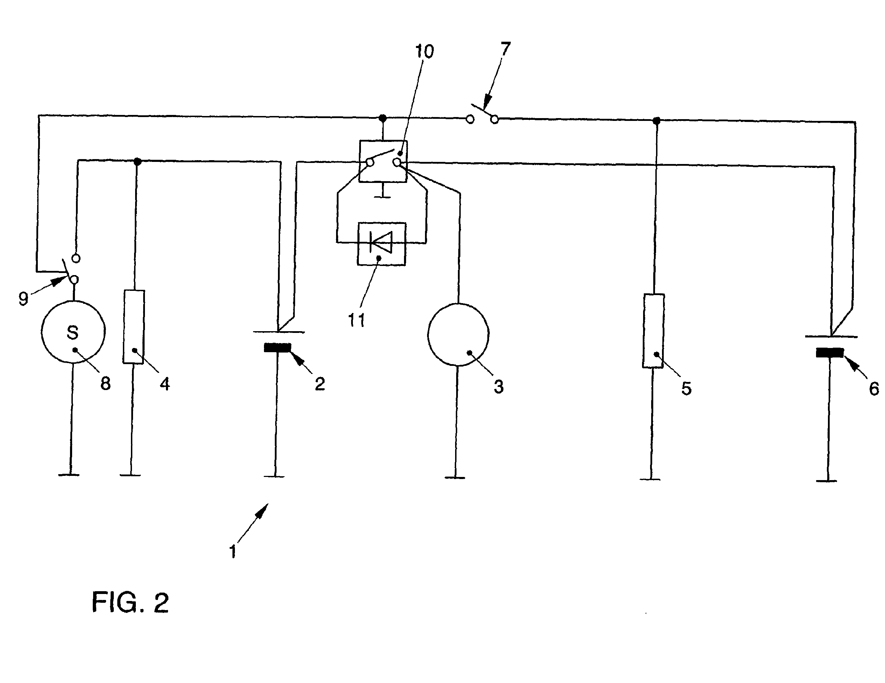

Eine mögliche Lösung des Problems der Versorgung der Primärverbraucher 4 beim Startvorgang bei entladener Bordnetzbatterie 6 ist in Fig. 2 dargestellt. Dazu werden die Primärverbraucher 4 parallel zur Starterbatterie 2 geschaltet, wodurch deren Versorgung auch bei entladener Bordnetzbatterie 6 sichergestellt ist. Nachteilig an dieser Anordnung ist, daß die Versorgung der Primärverbraucher auf Kosten der Starterbatterie 2 geschieht. Ist im Normalbetrieb die Ladestrecke über die Diode 11 gesperrt, so versorgt die Starterbatterie 2 die Primärverbraucher 4 und kann dadurch entladen werden. Ist die Ladestrecke über die Diode 11 freigeschaltet, so ist zum einen wieder die Ladespannung um den Spannungsabfall über der Diode 11 reduziert und zum anderen teilt sich der Ladestrom auf die Starterbatterie 2 und die Primärverbraucher 4 auf, so daß sich die Ladung der Starterbatterie 2 im Normalbetrieb verschlechtert.

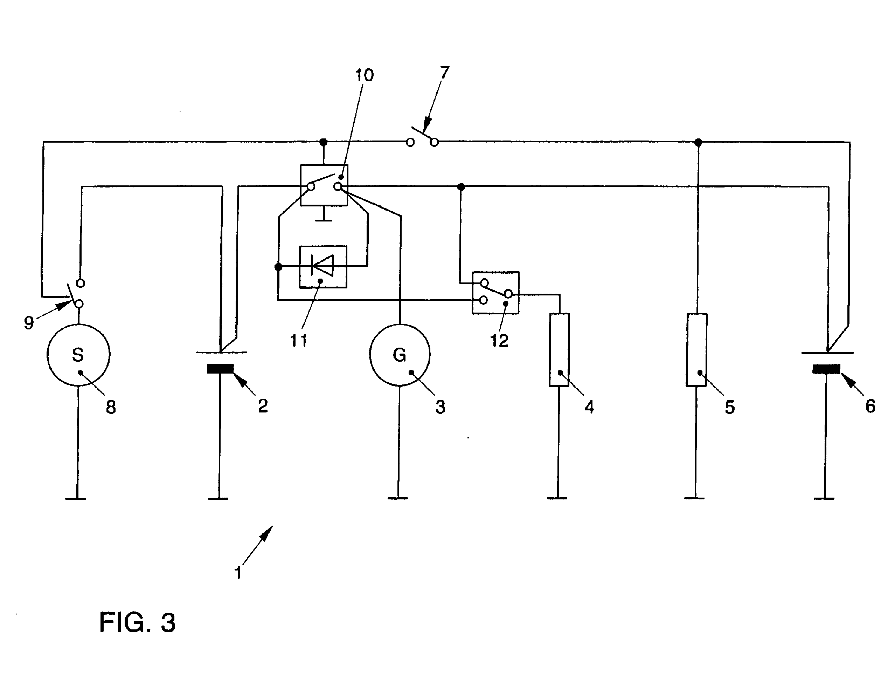

Zur Lösung dieses Problems kann dem Primärverbraucher 4 ein weiterer Umschalter 12 zugeordnet werden, mittels dessen die Primärverbraucher 4 zwischen Bordnetzbatterie 6 und Starterbatterie 2 umgeschaltet werden können, was in Fig. 3 dargestellt ist. Dabei werden die Primärverbraucher 4 im Normalfall über die Bordnetzbatterie 6 versorgt. Ist hingegen die Bordnetzbatterie 6 entladen, so wird über den Umschalter 12 der Primärverbraucher 4 mit der Starterbatterie 2 verbunden. Nachteilig an dieser Anordnung ist der zusätzliche Umschalter 12. Darüber hinaus wird ein nicht dargestellter Meßshunt benötigt, um die Umschaltbedingungen zu erfassen. Des weiteren ist weiterhin die Ladespannung für die Starterbatterie 2 um den Spannungsabfall an der Diode 11 reduziert.

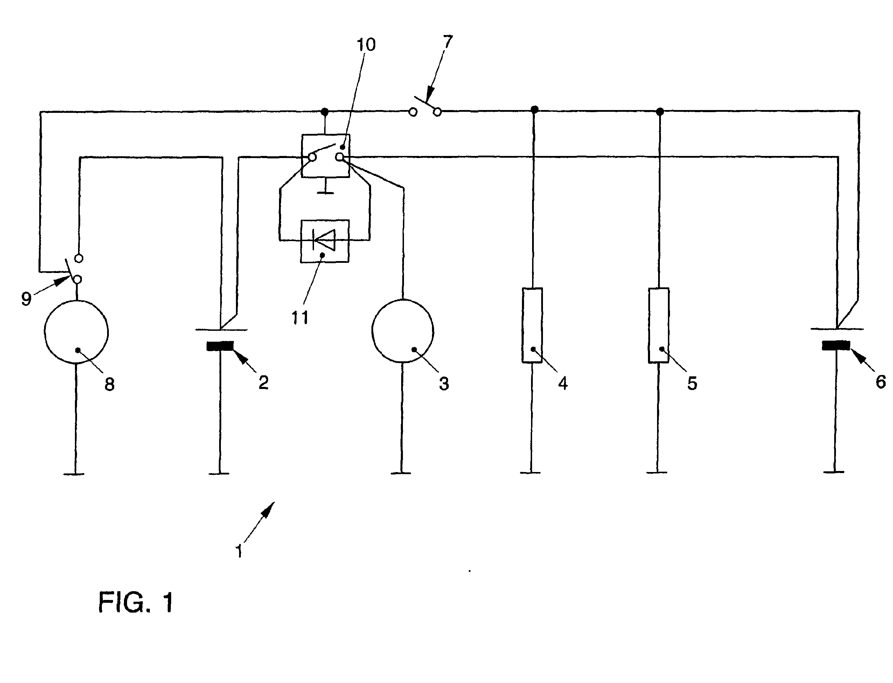

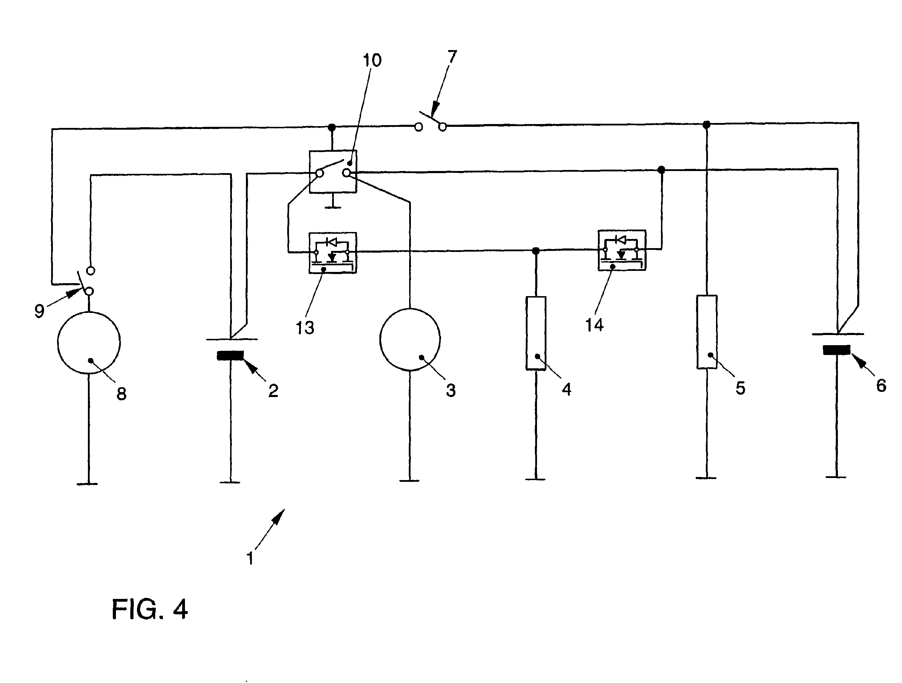

Eine umfassende Lösung der Probleme ergibt sich durch die Schaltungsanordnung gemäß Fig. 4, bei der die Diode 11 durch einen Power-MOSFET 13 ersetzt wurde, dessen Drainanschluß mit der Starterbatterie 2 und dessen Sourceanschluß mit den Primärverbrauchern 4 verbunden ist. Zusätzlich ist zwischen dem Sourceanschluß und der Bordnetzbatterie 6 ein weiterer Power-MOSFET 14 angeordnet. Herstellungsbedingt weist der Power-MOSFET 13, 14 eine parasitäre Diode in Inversrichtung auf, die in der Schaltungsanordnung parallel zur eigentlichen Transistorstrecke eingezeichnet ist. Des weiteren verfügen die MOSFETs 13, 14 über eine interne Strommessung, einen Überstromschutz und einen Temperaturschutz. Im Normalbetrieb ist der MOSFET 14 über eine entsprechende Gatespannung durchgeschaltet und der MOSFET 13 gesperrt. In diesem Fall arbeitet die Schaltung entsprechend der in Fig. 1. Sinkt nun während des Betriebes die Spannung der Starterbatterie 2 unter die der Bordnetzbatterie 6, so kann über die parasitäre Diode des MOSFETs 13 ein Ladestrom fließen, wenn die Spannungsdifferenz ca. 0,7 V ist. Dieser fließende Ladestrom kann über die inteme Strommessung vom Steuergerät erfaßt werden. Das Steuergerät erzeugt dann eine Gatespannung für den MOSFET 13, so daß dieser durchgeschaltet und invers betrieben wird. Dadurch kann der Ladestrom von der Bordnetzbatterie 6 vom Sourceanschluß zum Drainanschluß des MOSFETs 13 fließen und die Starterbatterie aufladen. Da der Innenwiderstand des durchgeschalteten MOSFETs 13 bei ca. 10 m Ω liegt, steht nahezu die gesamte Spannung der Bordnetzbatterie 6 als Ladespannung zur Verfügung. Anhand des Stromverlaufs kann dann das Steuergerät die Beendigung des Ladevorganges erfassen und den MOSFET 13 wieder sperren. Ist vor einem Startvorgang die Bordnetzbatterie 6 entladen, so kann dies das Steuergerät anhand des Stromverlaufs am MOSFET 14 oder der Spannung der Bordnetzbatterie 6 erfassen und diesen sperren. Durch Freischalten des MOSFETs 13 werden dann die Primärverbraucher 4 über die Starterbatterie 2 versorgt. Ein Problem der Schaltungsanordnung gemäß Fig. 4 ist, daß bei einem defekten, sich nicht schließenden Schalter 10 ein Kurzschlußstrom von der Bordnetzbatterie 6 über die parasitären Dioden der MOSFETs 13, 14 zur Starterbatterie fließen kann.

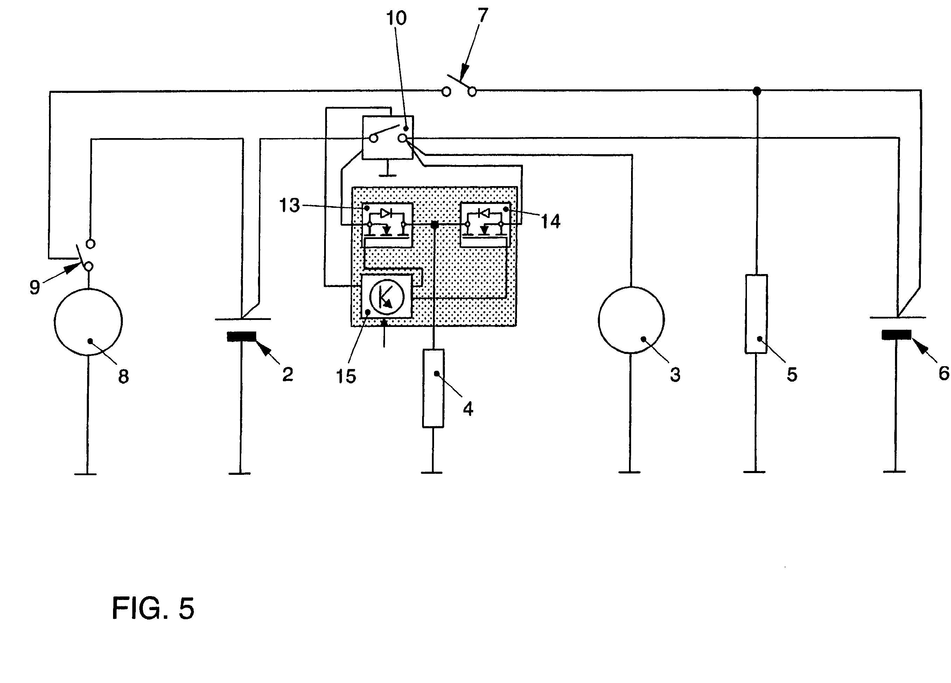

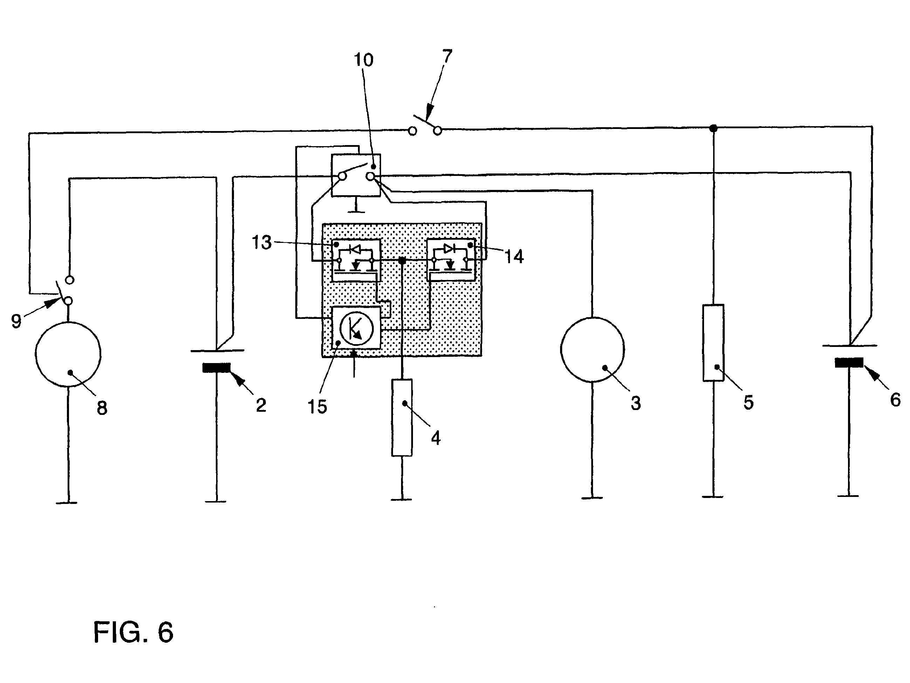

Zur Lösung dieses Problems können die MOSFETs 13, 14, wie in Fig. 5 dargestellt, gegeneinander verpolt werden. Dazu wird der Sourceanschluß des MOSFET 13 mit der Starterbatterie 2 verbunden. Dadurch ist die parasitäre Diode des MOSFET 13 im Fall des defekten Schalters 10 in Sperrichtung gepolt und verhindert ein Entladen der Bordnetzbatterie 6 . Allerdings kann somit über die Diode bei entsprechendem Potential an den Primärverbrauchern 4 ein Strom von der Starterbatterie 2 zu den Primärverbrauchern 4 fließen und die Starterbatterie 2 entladen. Deshalb werden die Polrichtungen der beiden MOSFETs 13, 14 umgedreht, was in Fig. 6 dargestellt ist. Im Kurzschlußfall sperrt die parasitäre Diode des MOSFET 14 und die Entladestrecke der Starterbatterie 2 wird durch die parasitäre Diode des MOSFET 13 gesperrt. Die Ansteuerung der beiden MOSFETs 13, 14 und des Schalters 10 kann dabei, wie schematisch angedeutet, durch ein gemeinsames, einfach aufgebautes Steuergerät 15 vorgenommen werden.

### BEZUGSZEICHENLISTE

- 1.: Batteriesystem
- 2.: Starterbatterie
- 3.: Generator
- 4.: Primärverbraucher
- 5.: Sekundärverbraucher
- 6.: Bordnetzbatterie
- 7.: Zündanlaßschalter
- 8.: Starter
- 9.: Schalter
- 10.: Leistungsschalter
- 11.: Diode
- 12.: Umschalter
- 13.: Power-MOSFET
- 14.: Power-MOSFET

## Patentansprüche

1. Zwei-Batteriesystem (2, 6), umfassend eine Starterbatterie (2), einen Generator (3), Primärverbraucher (4), eine Bordnetzbatterie (6), einen Starter (8), einen zwischen Starterbatterie und Bordnetzbatterie angeordneten Leistungsschalter (10), und parallel zum Leistungsschalter (10) ein steuerbarer elektronischer Schalter (13) **dadurch gekennzeichnet, dass**
über den Leistungsschalter (10) beim Startvorgang die Starterbatterie (2) und die Bordnetzbatterie (6) parallel zusammenschaltbar sind, und dass über den steuerbarer elektronischer Schalter (13) eine Ladestrecke zwischen Bordnetzbatterie (6) und Starterbatterie (2) zum Aufladen der Starterbatterie freigeschaltet werden kann.

2. Zwei-Batteriesystem nach Anspruch 1, **dadurch gekennzeichnet, daß** der steuerbare elektronische Schalter (13) ein MOSFET ist.

3. Zwei-Batteriesystem nach Anspruch 2, **dadurch gekennzeichnet, daß** der Drainanschluß des MOSFET (13) mit der Starterbatterie (2) und der Sourceanschluß mit der Bordnetzbatterie (6) verbunden ist.

4. Zwei-Batteriesystem nach einem der Ansprüche 1 bis 3, **dadurch gekennzeichnet, daß** zwischen der Bordnetzbatterie (6) und dem Primärverbraucher (4) ein Schalter (12) angeordnet ist, mittels dessen der Strompfad zwischen Bordnetzbatterie (6) und Primärverbrauchern (4) abschaltbar ist.

5. Zwei-Batteriesystem nach Anspruch 4, **dadurch gekennzeichnet, daß** der Schalter (12) als steuerbarer elektronischer Schalter, insbesondere MOSFET (14), ausgebildet ist.

6. Zwei-Batteriesystem nach Anspruch 5, **dadurch gekennzeichnet, daß** die beiden MOSFETs (13, 14) gegeneinander verpolt angeordnet sind.

7. Zwei-Batteriesystem nach Anspruch 6, **dadurch gekennzeichnet, daß** die beiden Source-Anschlüsse der MOSFETs (13, 14) miteinander verbunden sind.

8. Verfahren zur Steuerung eines Zwei-Batteriesystems nach einem der vorangegangenen Ansprüche, umfassend folgende Verfahrensschritte:
a) Erfassen der Ladungsbilanz der Starterbatterie (2) und der Bordnetzbatterie (6) mittels des Stromverlaufs an dem steuerbaren elektronischen Schalter (13) und
b) Durchschalten des elektronischen Schalters, insbesondere MOSFET, (13) durch das Steuergerät (15), solange ein Ladestrom von der Bordnetzbatterie (6) zur Starterbatterie (2) fließen kann.

9. Verfahren nach Anspruch 7, **dadurch gekennzeichnet, daß** anhand des Stromverlaufs am MOSFET (14) vor Beginn des Startvorgangs auf den Ladezustand der Bordnetzbatterie (6) geschlossen wird und bei entladener Bordnetzbatterie (6) der MOSFET (14) durch das Steuergerät (15) gesperrt und der MOSFET (13) durchgeschaltet wird.

## Claims

1. Two-battery system (2, 6) comprising a starter battery (2), an alternator (3), primary loads (4), a vehicle power supply battery (6), a starter (8), a power switch (10) arranged between starter battery and vehicle power supply battery (6), and a controllable electronic switch (13) in parallel with the power switch (10), **characterized in that**
during the starting process, the starter battery (2) and the vehicle power supply battery (6) can be connected together in parallel via the power switch (10), and that
a charging path can be enabled between vehicle power supply battery (6) and starter battery (2) via the controllable electronic switch (13) to charge the starter battery.

2. Two-battery system according to Claim 1, **characterized in that** the controllable electronic switch (13) is a MOSFET.

3. Two-battery system according to Claim 2, **characterized in that** the drain terminal of the MOSFET (13) is connected to the starter battery (2), and the source terminal to the vehicle power supply battery (6).

4. Two-battery system according to one of the Claims 1 to 3, **characterized in that** a switch (12) is arranged between the vehicle power supply battery (6) and the primary load.(4), by means of which the current path between vehicle power supply battery (6) and primary loads (4) can be interrupted.

5. Two-battery system according to Claim 4, **characterized in that** the switch (12) is designed as a controllable electronic switch, in particular a MOSFET (14).

6. Two-battery system according to Claim 5, **characterized in that** the two MOSFETs (13, 14) are arranged so that they are connected with the opposite polarity to each other.

7. Two-battery system according to Claim 6, **characterized in that** the two source terminals of the MOSFETs (13, 14) are connected together.

8. Method for controlling a two-battery system according to one of the preceding claims, comprising the following method steps:
a) detecting the charge balance of the starter battery (2) and the vehicle power supply battery (6) by means of the current characteristic across the controllable electronic switch (13), and
b) closing the electronic switch, in particular the MOSFET (13), by means of the control device (15) while a charging current can flow from the vehicle power supply battery (6) to the starter batter (2).

9. Method according to Claim 7, **characterized in that** prior to the starting process, a decision is made on the charge state of the vehicle power supply battery (6) based on the current characteristic across the MOSFET (14), and if the vehicle power supply battery (6) is discharged, the control device (15) disables the MOSFET (14) and enables the MOSFET (13).

## Revendications

1. Système à deux batteries (2, 6) comprenant une batterie de démarreur (2), un alternateur (3), une charge primaire (4), une batterie de réseau de bord (6), un démarreur (8), un commutateur de puissance (10) disposé entre la batterie de démarreur et la batterie de réseau de bord ainsi qu'un commutateur électronique commandable (13) en parallèle avec le commutateur de puissance (10), **caractérisé en ce que** la batterie de démarreur (2) et la batterie de réseau de bord (6) peuvent être connectées en parallèle par le biais du commutateur de puissance (10) lors du démarrage et qu'une branche de charge peut être libérée entre la batterie de réseau de bord (6) et la batterie de démarreur (2) par le biais du commutateur électronique commandable (13), pour charger la batterie de démarreur.

2. Système à deux batteries selon la revendication 1, **caractérisé en ce que** le commutateur électronique commandable (13) est un MOSFET.

3. Système à deux batteries selon la revendication 2, **caractérisé en ce que** la borne de drain du MOSFET (13) est reliée avec la batterie de démarreur (2) et la borne de source avec la batterie de réseau de bord (6).

4. Système à deux batteries selon l'une des revendications 1 à 3, **caractérisé en ce qu'**entre la batterie de réseau de bord (6) et la charge primaire (4) est disposé un commutateur (12) qui permet de couper le trajet du courant entre la batterie de réseau de bord (6) et les charges primaires (4).

5. Système à deux batteries selon la revendication 4, **caractérisé en ce que** le commutateur (12) est réalisé sous la forme d'un commutateur électronique commandable, notamment un MOSFET (14).

6. Système à deux batteries selon la revendication 5, **caractérisé en ce que** les deux MOSFET (13, 14) sont disposés selon une polarité inverse l'un par rapport à l'autre.

7. Système à deux batteries selon la revendication 6, **caractérisé en ce que** les deux bornes de source des MOSFET (13, 14) sont reliées entre elles.

8. Procédé de commande d'un système à deux batteries selon l'une des revendications précédentes, comprenant les étapes suivantes :
a) Acquisition du bilan de charge de la batterie de démarreur (2) et de la batterie de réseau de bord (6) au moyen de la courbe du courant au niveau du commutateur électronique commandable.(13) et
b) Commutation à l'état passant du commutateur électronique, notamment du MOSFET (13) par la commande (15) tant qu'un courant de charge peut circuler de la batterie de réseau de bord (6) vers la batterie de démarreur (2).

9. Procédé selon la revendication 7, **caractérisé en ce que** l'état de charge de la batterie de réseau de bord (6) est déduit avant de commencer l'opération de démarrage au moyen de la courbe de courant au niveau du MOSFET (14) et, si la batterie de réseau de bord (6) est déchargée, le MOSFET (14) est bloqué par la commande (15) et le MOSFET (13) est rendu passant.
